# EUROPEAN PATENT APPLICATION

(11) **EP 0 704 988 A2**
(43) Date of publication of application: **03.04.1996**
(21) Application number: 95114186.0
(22) Date of filing: 09.09.1995
(51) Int. Cl.: H04B 3/20

(54) **Cellular terminal with echo suppressor**

(30) Priority: 30.09.1994 ES 9402067
(71) Applicant: ALCATEL STANDARD ELECTRICA, S.A., E-28045 Madrid (ES)
(72) Inventor: Morcillo Martinez, Antonio Javier, E-28030 Madrid (ES)
(74) Representative: Pohl, Herbert, Dipl.-Ing.

(57) **Abstract**

For access to a GSM type mobile communications network and provision of basic telecommunications services to a telephone terminal (TT) connected to it.

It is derived from a GSM mobile cellular terminal with a line interface that consists of a two-wire conversion circuit (H) connected to the transmit path (TP) and the receive path (RP), and to the subscriber line to which the telephone terminal (TT) is connected, and thereby perform a four-to-two wire conversion.

It also comprises an echo suppressor (ES) that precedes the two-wire conversion circuit (H), consisting of two signal attenuators (ATT1,ATT2) inserted in the transmit and receive paths and activated by means of an attenuation control module (ATTC) that receives the two signals coming from the voice activity detector and from the silence descriptor frame detector present in GSM type cellular terminals.

## Description

### OBJECT OF THE INVENTION

This invention concerns a fixed cellular terminal for use in mobile cellular communications networks that provide voice services in telephone-type terminals, particularly useful in those areas where there is still no fixed communications infrastructure, or where this has now become saturated, and an operational "island" is planned for which this communications service will be offered. This is the case in rural areas, for example.

The fixed cellular terminals are basically very similar to mobile cellular terminals, which work like a four-wire terminal: two for the transmit path and two for the receive path, independent from each other.

The purpose of this invention is to provide an interface that performs the four-to-two wire conversion, and vice versa, in fixed cellular terminals derived from mobile terminals in such a way as to provide a two-wire subscriber line for connection to standard telephone terminals, with acceptable return echo characteristics from the remote user's terminal. This invention is of particular application in GSM type cellular terminals in which already developed parts that are necessary to satisfy those standards that must be met in this type of system can be reused.

### BACKGROUND OF THE INVENTION

In recent years, the proliferation of mobile services based on the development of new standards has resulted in a series of alternative uses for networks of this type that extend beyond that for which they were initially developed.

In certain areas of low subscriber density, for example, the installation of a fixed infrastructure would be very costly and not cost effective. Thus in such areas it is difficult to provide a basic telephone service, at least in the same form as is provided in large cities. To resolve this problem, recourse is made to diverse technologies based mainly on radio access, which greatly simplifies the infrastructure of the connections.

One of the alternatives that most expects to be widely accepted, according to the article "APPLICATION OF MOBILE TECHNOLOGY IN THE ACCESS NETWORK" by J. M. García Aguilera, published on pages 124 and 125 of the Workshop Proceedings of the 23rd European Microwave Conference, held in Madrid on September 10th, 1993, is based on already existing mobile network infrastructures, whereby these can support simultaneously mobile communications services, with all their characteristics associated with the mobility concept, and "fixed" services but having cellular radio access.

This means that, in regions where a mobile cellular system, for example GSM, is already installed, the possibility of the operators being able to offer subscriber lines can be provided very rapidly, as long as the capacity of the cell, mainly as far as it concerns the number of available channels, so permits. For this reason, development has been going on of what have come to be known as "fixed cellular terminals", which are basically mobile cellular terminals, in this case of the GSM type, from which the mobility functions have been removed. That is, the network control system knows that the terminal in question will always be found in the same cell and, consequently, the processing that it will require will be simpler than that of a standard mobile terminal.

In addition they usually make use of directional antennas which, firstly, permit a greater range than that which the mobile cellular area covers and, secondly, interferences produced in other receivers and received from other receivers are less.

The GSM cellular mobile system establishes two-way communications, termed full-duplex, by means of equivalent four-wire connections. This four-wire link is fully established up to the final audio stage of the mobile cellular terminal, that is the loudspeaker and the microphone, over perfectly separated wire pairs, in contrast to the case of standard telephones of the basic telephone service in which a two-wire conversion takes place for transmitting and receiving simultaneously over a subscriber line and subsequently, in the terminal set, making the conversion to four wires in order to separate the received signals destined for the loudspeaker from the transmitted signals coming from the microphone.

To adapt the two equipments to each other, the fixed cellular terminal and the telephone terminal, over a standard subscriber line, it is common practice to make use of, for example, passive circuits with hybrid transformers or active circuits as illustrated in the patent application WO 90/13962 in which it is described the use of an electronic bridge circuit which converts the balanced two-wire audio signal coming from a telephone terminal into unbalanced four-wire audio signals for transmitting and receiving these audio signals in a bidirectional telephone system.

Nevertheless, it should be noted that for the GSM standard, the maximum transmission time allowed in both directions (send and receive) between the subscriber terminal and the point of interconnection of the GSM network and the public switched network is 180 ms, as can be seen in the standard GSM 03.50 of the ETSI. On the other hand, according to the CCITT Recommendation G.131, which illustrates tolerable echo curves for networks with long delay, the attenuation of the sonority index has to have a very high value, which is very difficult to achieve when four-to-two wire conversions are made as is the case of this invention.

Thus, a technical problem lies in implementing an interface which performs the conversion to two-wire communications from four-wire communications, as is the case with GSM type cellular mobile terminals. This interface has to be completely transparent for the user and to satisfy the established standards, particularly those referring to maximum tolerable values of echo.

### CHARACTERISATION OF THE INVENTION

This invention has its principal application in GSM type fixed cellular terminals used for access to a mobile communications network that subsequently has access to the public switched network in order to provide thereby basic telecommunications service to a two-wire telephone terminal connected to it. The fixed cellular terminal, derived from a mobile cellular terminal, operates with four-wire links, and for said reason this terminal has an interface that includes a two-wire conversion circuit that is connected, on one side, to the audio transmit and receive pairs of the fixed cellular terminal and, on the other side, to the subscriber line pair to which the telephone terminal is connected.

In this way the conversion from four to two wires is made, permiting the telephone terminal to be connected forthwith to the fixed cellular terminal.

The interface is characterised in that it also comprises an echo suppressor in the four-wire part of the link and prior to the two-wire conversion circuit. This suppressor comprises two signal attenuators, one for each path, such that it is possible to attenuate at least one of the two signals present in each of the transmit and receive paths, respectively, and to substantially suppress the echo signals produced mainly in the two-wire conversion circuit and in the telephone terminal.

The attenuators of this echo suppressor are controlled by an attenuation control circuit that receives a voice indication signal coming from the silence frame detection circuit (that is included in GSM type terminals) and attenuates the signals in the transmit path in the event that the frames received contain voice information.

This attenuation control circuit can also receive a voice detection signal coming from a voice activity detector located in the voice encoder of the fixed cellular terminal, such that in the event that there is no voice activity, the transmit path would also be significantly attenuated.

As a consequence of the application of this invention, it is possible to perform four-to-two wire conversion, for signals in the voice frequency band, between terminals working with four wires and two-wire telephone terminals without there being, on one hand, instability-inducing feedback and, on the other hand, echos that annoy the users of the service, especially at the remote end.

It proves particularly beneficial in the case of four-wire terminals that form part of a GSM type digital cellular mobile network, in which the reuse of parts already present in the terminal itself permit the immediate application of the invention at an extremely low cost.

### BRIEF FOOTNOTES TO THE FIGURES

A fuller explanation of the invention can be found in the following description based on the accompanying figures in which:
- figure 1 shows, in schematic form, a telephone link between two terminals, a fixed one connected directly to the public switched network and a mobile one that has access to this network via a cellular type public land mobile communications network;
- figure 2 shows a similar configuration, but in which the mobile terminal has been replaced by a fixed cellular terminal to which is connected a standard type telephone terminal,
- figure 3 is a block diagram of a GSM terminal for cellular mobile communications, and from which a fixed cellular terminal has been derived,
- figure 4 shows, in basic form, the classic solution for carrying out four-to-two wire conversion to permit connection of a two-wire standard telephone terminal,
- figure 5 shows, in schematic form, the solution proposed so that the above interface satisfies the existing recommendations with respect to return echo characteristics, and
- figures 6 and 7 show the block diagrams of the modules involved in a GSM cellular terminal in the transmit part and in the receive part, respectively, of the discontinuous transmission process.

### DESCRIPTION OF AN IMPLEMENTATION OF THE INVENTION

As a prior consideration concerning this implementation of the invention, it has to be pointed out that in telephone conversations, even in the case of full duplex operation, when one of the subscribers talks, the other usually listens, meaning that conversation really takes place only in duplex. This is a detail which has not only been taken into account in developing this invention, but also in other types of communications networks like, for example, satellite links.

Consideration must also be given to the requirement to comply with certain standards corresponding to GSM type terminals based on the technique known as "discontinuous transmission" and which are reflected in the ETSI standards with references GSM 06.31 "European digital cellular telecommunications system (Phase 2); Discontinuous Transmission (DTX) for full rate speech traffic channel", October 1993; GSM 06.12 "European digital cellular telecommunications system (Phase 2); Comfort noise aspect for full rate speech traffic channels", October 1993; and GSM 06.32 "European digital cellular telecommunications system (Phase 2); Voice Activity Detection (VAD), October 1993.

These documents deal with the processes of determining whether the bursts to be transmitted by a terminal carry speech or not. To do this, it is determined if there is voice activity and such bursts are marked with a bit that serves to indicate whether they contain speech or if they are silence descriptions. In the latter case, they will be used at the far end of the communication to generate background noise with the same characteristics as that present at the near end. For this reason there are also, on the receive side, means of detecting silence description bursts in order to identify whether the received burst carries speech or not.

There are many telecommunications networks that permit voice and/or data communications services between subscribers connected to them. Of these, that of widest application is the public switched telephone network which provides, among others, the basic telephone service by means of which a subscriber is connected, via a two-wire telephone line, to a local exchange where a conversion to a four-wire circuit is made. From this point, and up to the subscriber line interface at the far end, the communication is always on equivalent four-wire circuits.

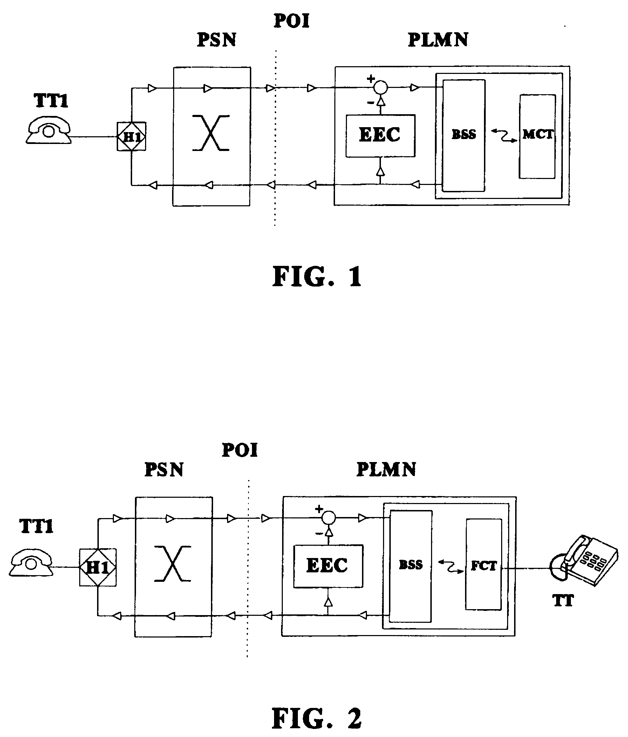

Figure 1 shows, in schematic form, the connection between a subscriber to the basic telephone service via a two-wire telephone terminal TT1 and the public switched telephone network PSN. For this, it is necessary to have a two-to-four wire conversion circuit H1 known as a hybrid coil, or simply a hybrid. This hybrid performs the separation of transmission from reception signals on two unidirectional pairs, in the direction of subscriber to exchange, while, in the other direction, from exchange to subscriber, it transmits these over a single bidirectional pair. From this point, the public switched telephone network always works with four-wire.

In the case of a subscriber to a public land mobile communications network PLMN, such as the GSM cellular mobile network, the connection between the mobile cellular terminal MCT and the network is made as shown in the righthand part of figure 1, that is, by means of a base stations system BSS, in which the whole communications process is done on four-wire equivalent circuits up to the microphone and loudspeaker.

When a subscriber to the public switched telephone network PSN wishes to set up a communications link with another on the GSM network, the interconnection is also made on four wires at an interface termed POI (Point-Of-Interconnection).

The GSM network also contemplates, in its mobile services switching centre, called MSC, an electric echo canceller EEC situated on the receive pair of the POI for suppressing possible echo produced by the terminal connected to the public switched network, the effect of which is extremely harmful in the mobile terminal because the GSM network has a high inherent delay.

Figure 2 shows the connection implemented through cellular access of a basic telephone service subscriber to the public switched network PSN via a two-wire telephone terminal TT1 and a subscriber also to the basic telephone service via cellular access. The infrastructure is essentially the same, but the mobile cellular terminal MCT of figure 1, has been replaced by a fixed cellular terminal FCT to which a standard type telephone terminal TT is connected. The network operator, for this type of access, considers it as a fixed access, whereby billing, numbering, etc. have to be completely compatible with the former.

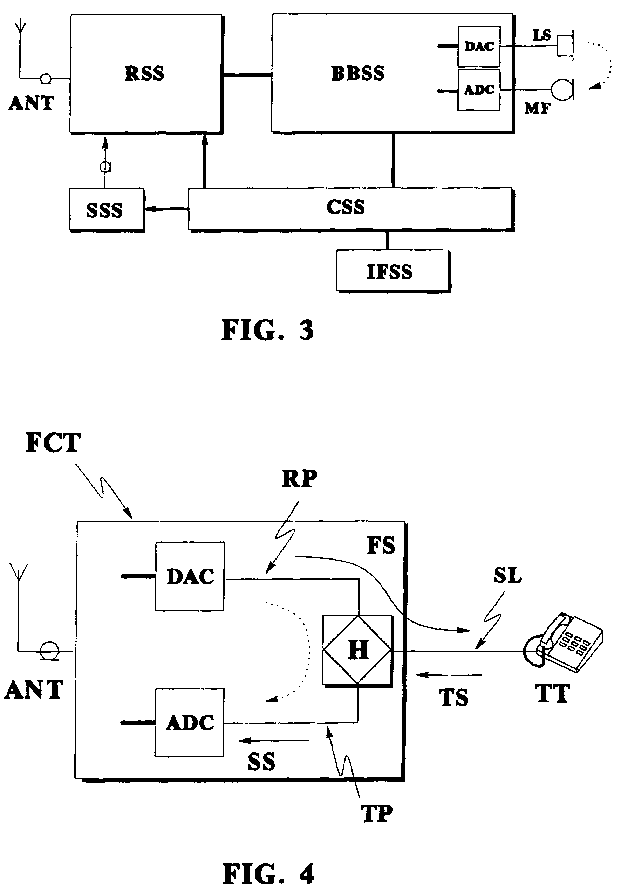

Figure 3 shows the configuration of a GSM type cellular terminal, which consists of an antenna ANT, a radio subsystem RSS, a synthesiser subsystem SSS, a baseband subsystem BBSS, a control subsystem CSS and an interface subsystem IFSS. The baseband subsystem BBSS works with the two digital channels, transmit and receive, separately, in a manner equivalent to four-wire operation, such that to one of the channels is connected the microphone MF prior to the conversion to digital format in an analogue-to-digital converter ADC and to the other the loudspeaker LS is connected with the corresponding conversion to analogue format in a digital-to-analogue converter DAC. In such a situation, the only source of echo to be considered is the acoustic echo produced by the coupling between the loudspeaker LS and the microphone MF, the value of which, except for handsfree applications, is insignificant.

Figure 4 shows, in schematic form, the main modifications made to a mobile cellular terminal to implement a fixed cellular terminal FCT to which a four-to-two wire conversion circuit H is added, the two-wire output of which is the subscriber line SL to which the telephone terminal TT is connected. In this case the echo phenomenon occurs as follows: the fixed cellular terminal FCT recovers a first signal FS produced at the other end of the link which is sent to the telephone terminal TT whereby this first signal FS passes through a two-wire conversion circuit H in which it suffers a determined attenuation. The telephone terminal TT transmits a signal TS that is basically the actual signal produced in its microphone to which is added the returned echo of the first signal FS produced in the two-to-four wire conversion circuit that is present in the telephone terminal TT itself for separating the signals, one to be applied to the loudspeaker and the other coming from the terminal's microphone. The signal TS coming from the telephone terminal TT arrives at the two-wire conversion circuit H and, after suffering the corresponding attenuation, is forwarded to the transmit path TP over which is transmitted a second signal SS consisting of a signal coming from the telephone terminal TT and to which must also be added another echo signal produced in the actual two-wire conversion circuit H of the fixed cellular terminal FCT.

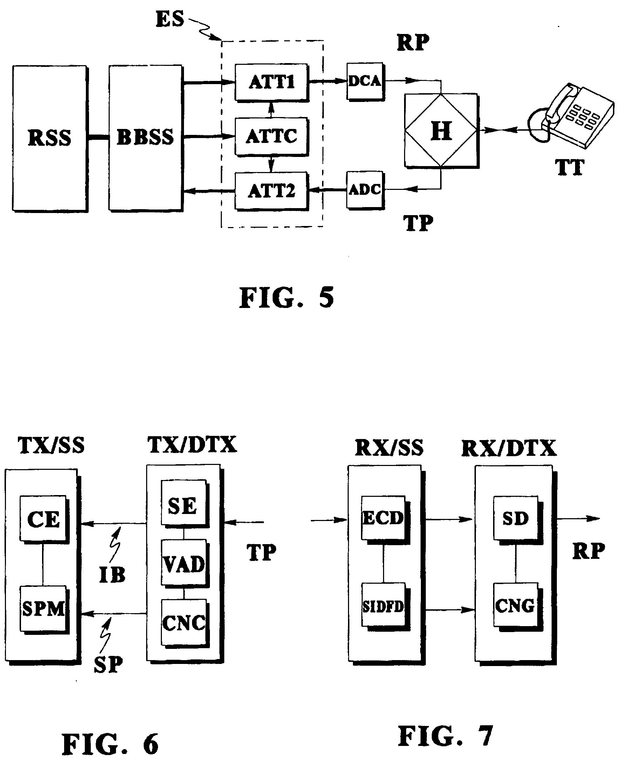

Figure 5 shows, according to the invention, the part of the fixed cellular terminal FCT involved in overcoming the returned echo. For this purpose the fixed cellular terminal FCT incorporates an echo suppressor ES that consists of two attenuators, one for transmitting ATT2 and the other for receiving ATT1. These attenuators are controlled by an attenuation control circuit ATTC which determines the amount of attenuation to be introduced by both attenuators ATT1, ATT2 as a function of certain preestablished policies.

This attenuation control circuit ATTC receives control signals from the baseband subsystem BBSS for its operation and, depending on the signals received and the established policy, determines the level of attenuation for each attenuator ATT1 and ATT2.

Figures 6 and 7 show, in the transmit part and the receive part, respectively, the functional blocks already present in a GSM terminal and which are implicated in this invention. In the transmit part, the voice signal TP which contains information on speech or silence (or, in other words, background noise) is applied to the discontinuous transmission handler TX/DTX which comprises a GSM voice encoder SE, a voice activity detector VAD according to GSM standard 06.32, and a comfort noise calculator CNC that evaluates the noise parameters in the terminal and encodes them into special bursts termed SID (SIlence Descriptor) according to GSM standard 06.12.

Thus, at the output of this discontinuous transmission handler TX/DTX two signals appear: one of them IB contains the input signal coding bits and the other signal SP is a bit to indicate whether the previous signal is speech or a silence descriptor.

These signals are sent to a transmission subsystem TX/SS that contains a channel encoder CE to which is added a frame indicator SPM, to perform channel encoding and afterwards GMSK 0.3 modulation, well known in the GSM standard, and subsequent transmission of this on line.

In the receive part, there is a receive side discontinuous transmission handler RX/DTX and a reception subsystem RX/SS which receives a signal containing digital information which, once demodulated, is sent to an error correction and detection circuit ECD, which performs the channel decoding function in opposite fashion to that which takes place in the encoder. There is also a silence descriptor frame detector SIDFD that determines whether the received information corresponds to a speech signal or to noise parameters.

Thus, if it is encoded voice, this is decoded in the GSM voice decoder SD in order to recover the signal that was transmitted at the other end of the link, while if it is information on noise parameters, these are applied to a comfort noise generator CNG which uses them to generate an audio signal that reproduces the background noise present at the other end.

The echo suppressor ES of figure 5 receives on the receive path RP the decoded signal coming from the receive side discontinuous transmission handler RX/DTX, which is applied to the receive side attenuator ATT1. The transmit side attenuator ATT2 receives the signal present on the transmit path TP and sends it to the transmit side discontinuous transmission handler TX/DTX already described.

The attenuation control circuit ATTC receives the signals from the voice activity detector VAD coming from the silence descriptor frame detector SIDFD such that, when the received signal is detected to be voice, the signal present on the transmit path TP is attenuated by means of the transmit side attenuator ATT2, so that no echo is returned to the user speaking at the far end. In the event that it is not voice which is being received, only slight attenuation is introduced in the receive path since there are no problems with echo because the background noise echo has no inherent correlation and therefore is not annoying.

If there is silence at both ends, by definition there can be no echo although the echo suppressor attenuates both sides equally, which serves to prevent possible oscillations through electrical and/or acoustic coupling. If both speakers are talking, though this is not a situation that lasts very long, both attenuators also attenuate at an intermediate level between zero and their maximum value in order not to suppress completely one of the two speech signals but, instead, lowing the power in both.

In addition, when voice detection transitions arise, i.e. the user who was speaking starts to listen and the one who was listening starts to talk, the attenuators change their respective levels gradually so as to avoid switchover noise that would arise if the background noise level changed abruptly.

Finally, it has to be pointed out that the attenuators, since they are in the digital part of the cellular terminal, beside the respective digital-to-analogue converter DAC or analogue-to-digital converter ADC, are very easy to implement each being a shift register such that each movement of one bit towards the bits of lower order of magnitude corresponds to a given attenuation of the signal. In this way, the attenuators, just like the rest of the echo suppressor, prove extremely simple to design with digital circuits or these functional features can be included as additional tasks to be carried out by the actual microprocessor or microprocessors that habitually perform the baseband subsystem jobs mentioned above.

## Claims

1. **FIXED CELLULAR TERMINAL** for access to a mobile communications network and provision of telecommunications services to a telephone terminal (TT) connected to it by means of a two-wire line, this fixed cellular terminal having an interface that includes a two-wire conversion circuit (H) connected between the transmit (TP) and receive (RP) paths and the subscriber line pair (SL) to which the telephone terminal (TT) is connected, to perform in this way a four-to-two wire conversion; this interface being **characterised** in that it also incorporates an echo suppressor (ES) in the four-wire part of the link and prior to the two-wire conversion circuit (H), which includes two signal attenuators (ATT1, ATT2), one for the transmit path and the other for the receive path, in the four-wire part of the link, whereby at least one of the two voice band electrical signals is attenuated, one travelling towards the telephone terminal (TT) and the other coming from it, in order to reduce substantially the echo signals produced mainly in the two-wire conversion circuit (H) and in the telephone terminal (TT).

2. **TERMINAL** according to claim 1, **characterised** in that the echo suppressor (ES) also includes an attenuation control circuit (ATTC) that receives a speech indicator signal (SP) coming from the silence descriptor frame detector (SIDFD) present in all GSM terminals, in order to decide when the received frames correspond to speech or to silence, and in this way attenuate the signals present on the transmit path (TP) in the four-wire part of the link in the event that the received frames are carrying speech information.

3. **TERMINAL** according to claim 2, **characterised** in that the attenuation control circuit (ATTC) receives a speech detection signal coming from the voice activity detector (VAD) that is present in all GSM terminals in order to attenuate the signal present in the transmit path (TP) and receive path (RP) at the four-wire interface, in the event that voice activity is detected in the terminal and also the received frames contain speech information.

4. **TERMINAL** according to claim 3, **characterised** in that the sum of the attenuations in the transmit path (TP) and receive path (RP) remains approximately constant, independently of the voice activity in both directions.

5. **TERMINAL** according to claim 3, **characterised** in that the variations in the value of the attenuation produced in the receive path (RP) and transmit path (TP), when changes in voice activity occur in either of the two directions, progress in a gradual manner from their previous value to their new value, avoiding thereby the noise that would be produced as a consequence of the switching action of the signal attenuators (ATT1, ATT2).

6. **TERMINAL** according to claim 1, **characterised** in that at the four-wire interface and prior to the two-wire conversion circuit (H) the signals that are being handled are digital, there being for this reason a digital-to-analogue converter (DAC) in the receive path (RP) and an analogue-to-digital converter (ADC) in the transmit path (TP), and in that the attenuators are both formed by a shift register in which the bits at their input are shifted by a whole number so as to divide the encoded value by a number that is the power of two.
